# EUROPEAN PATENT APPLICATION

(11) **EP 2 523 031 A1**
(43) Date of publication of application: **14.11.2012**
(21) Application number: 12167398.2
(22) Date of filing: 09.05.2012
(51) Int. Cl.: G02B 26/02, G09G 3/34

(54) **Display device**

(30) Priority: 12.05.2011 JP 2011107113
(71) Applicant: Japan Display East Inc., Chiba (JP)
(72) Inventor: Muneyoshi, Takahiko, Chiba-ken, 297-8622 (JP); Ando, Naohisa, Chiba-ken, 297-8622 (JP); Kuranaga, Takahide, Chiba-ken, 297-8622 (JP); Miyamoto, Mitsuhide, Chiba-ken, 297-8622 (JP); Watabe, Kazufumi, Chiba-ken, 297-8622 (JP)
(74) Representative: Beetz & Partner

(57) **Abstract**

Provided is a display device, including: a light shielding film (34) including a plurality of fixed apertures (36); a plurality of shutters (14); and a drive portion (40) for driving each of the plurality of shutters (14). The plurality of fixed apertures (36) each have an elongated shape including a long-side direction and a short-side direction, and include: fixed apertures (36a) of a first group in which the long-side direction is directed in a first direction; and fixed apertures (36b) of a second group in which the long-side direction is directed in a second direction orthogonal to the first direction. The plurality of shutters include: shutters (14a) of a first group, which correspond to the fixed apertures (36a) of the first group, respectively, and are linearly driven in the second direction; and shutters (14b) of a second group, which correspond to the fixed apertures (16b) of the second group, respectively, and are linearly driven in the first direction.

## Description

### BACKGROUND OF THE INVENTION

### 1. Field of the Invention

The present invention relates to a display device.

### 2. Description of the Related Art

Amicro-electro-mechanical system (MEMS) display is a display expected to replace a liquid crystal display (see Japanese Patent Application Laid-open No. 2008-197668). This display differs from a liquid crystal shutter type display utilizing polarization, and performs light-dark display by mechanically opening and closing a light transmissive window by a shutter unit including a fixed aperture and a shutter. Specifically, the shutter is arranged above the fixed aperture to block light, and the shutter is retracted from the position above the fixed aperture to allow light passage.

The fixed aperture is defined by an opening formed in a light shielding film, and the shutter is arranged at an interval from the light shielding film to enable driving thereof. Therefore, when the shutter is retracted from the position above the fixed aperture, light traveling perpendicularly to a screen passes through the fixed aperture, but light traveling obliquely in a direction of the retracted shutter is blocked by the shutter. Therefore, there has been a problem in viewing angle characteristics that brightness differs depending on viewing directions.

### SUMMARY OF THE INVENTION

The present invention has an object to solve the problem in viewing angle characteristics.
(1) According to an exemplary embodiment of the present invention, there is provided a display device, including: a light shielding film including a plurality of fixed apertures, which each allow passage of light; a plurality of shutters, which are arranged at an interval from the light shielding film and correspond to the plurality of fixed apertures, respectively, for controlling passage and blocking of the light; and a drive portion for driving each of the plurality of shutters to move between a position above the plurality of fixed apertures and a position retracted from the plurality of fixed apertures (that is, between a position for allowing the light to pass and a position for blocking the light). The plurality of fixed apertures each have an elongated shape including a long-side direction and a short-side direction, the plurality of fixed apertures including: fixed apertures of a first group in which the long-side direction is directed in a first direction; and fixed apertures of a second group in which the long-side direction is directed in a second direction different from (for example, orthogonal to) the first direction. The plurality of shutters include: shutters of a first group, which correspond to the fixed apertures of the first group, respectively, and are linearly driven in the second direction; and shutters of a second group, which correspond to the fixed apertures of the second group, respectively, and are linearly driven in the first direction. According to the present invention, the plurality of elongated fixed apertures are arranged in different directions, and hence it is possible to solve the problem in viewing angle characteristics that brightness differs depending on viewing directions.
(2) In the display device according to Item (1), a number of the fixed apertures of the first group may be equal to a number of the fixed apertures of the second group.
(3) In the display device according to Item (1) or (2), the plurality of fixed apertures may be arranged so that at least one column including at least two of the fixed apertures of the first group and at least one column including at least two of the fixed apertures of the second group are alternately arrayed.
(4) In the display device according to Item (1) or (2), a first region in which at least one of the fixed apertures of the first group is arranged and a second region in which at least one of the fixed apertures of the second group is arranged may be alternately arranged in both of a column direction and a row direction.
(5) In the display device according to any one of Items (1) to (4), the plurality of shutters may be formed to include a plurality of drive apertures, respectively, and the light may pass when the plurality of drive apertures are arranged at positions opposed to the plurality of fixed apertures, respectively.
(6) In the display device according to Item (5), n shutters, where n≥2, of the plurality of shutters may be integrated so as to include n drive apertures of the plurality of drive apertures.
(7) In the display device according to Item (6), the n drive apertures may each have an elongated shape including a long-side direction and a short-side direction, so as to be elongated orthogonal to a moving direction of the n integrated shutters, and may be arranged so as to be aligned in the long-side direction and adjacent to each other in the short-side direction.

### BRIEF DESCRIPTION OF THE DRAWINGS

In the accompanying drawings:
FIG. 1 is a sectional view schematically illustrating a display device according to an embodiment of the present invention;
FIG. 2 is a view illustrating a shutter and a drive portion thereof;
FIG. 3 is a plan view illustrating a state in which a part of the shutter is situated at a position covering a fixed aperture from above (position at which the fixed aperture and a drive aperture are offset from each other);
FIG. 4 is a plan view illustrating a state in which the shutter is situated at a position retracted from the fixed aperture (position at which the fixed aperture and the drive aperture communicate with each other);
FIG. 5 is a view illustrating a shutter of a first group when the fixed aperture and the drive aperture communicate with each other;
FIG. 6 is a view illustrating a shutter of a second group when the fixed aperture and the drive aperture communicate with each other;
FIG. 7 is a graph showing brightness characteristics of the display device according to the embodiment of the present invention; and
FIG. 8 is a view illustrating a modified example of the display device according to the embodiment of the present invention.

### DETAILED DESCRIPTION OF THE INVENTION

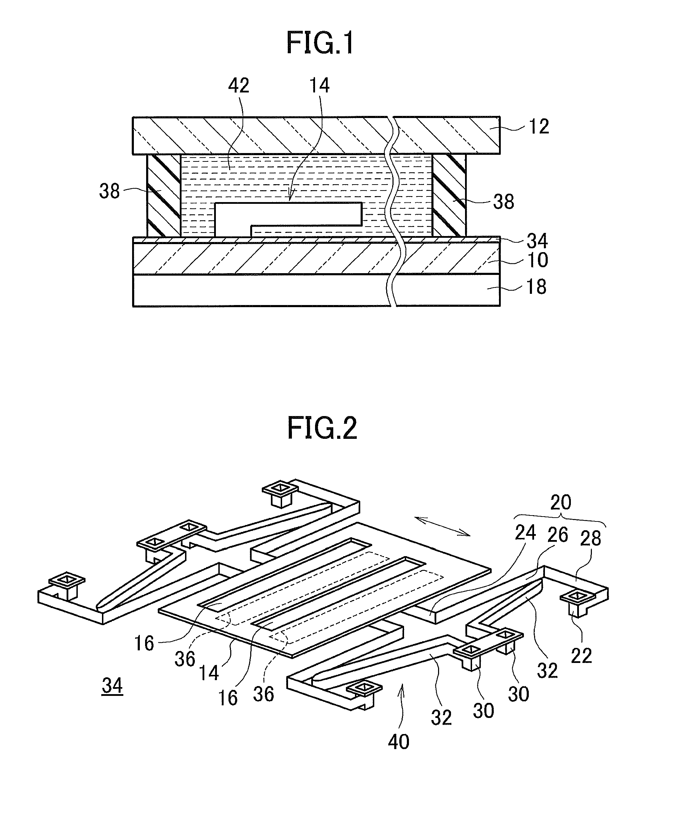

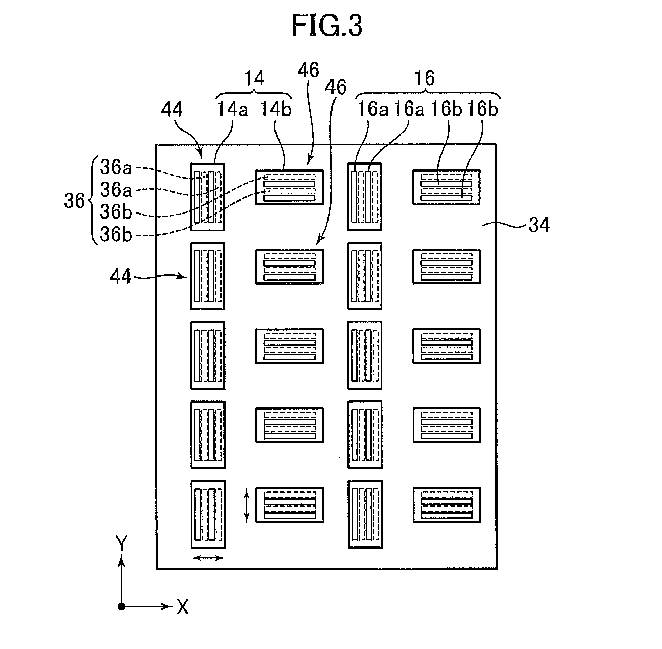

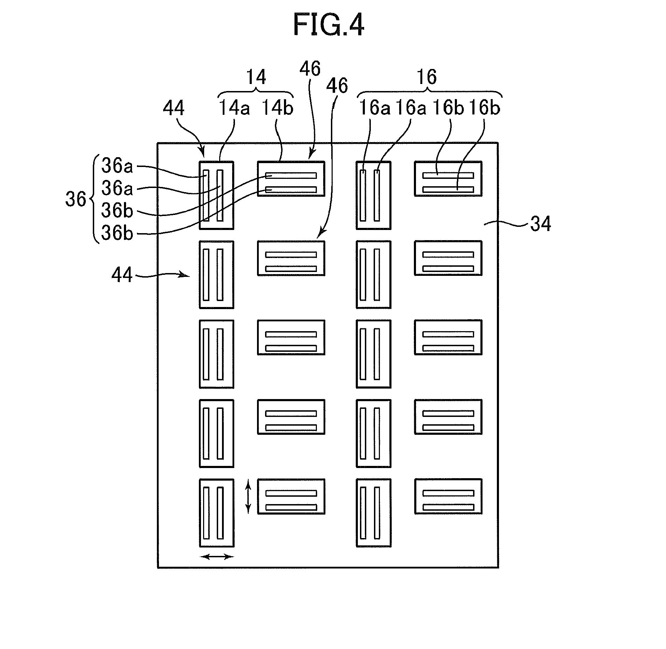

Hereinafter, an embodiment of the present invention is described with reference to the drawings. FIG. 1 is a sectional view schematically illustrating a display device according to the embodiment of the present invention. FIG. 2 is an enlarged perspective view of a part of an inner structure of the display device. FIGS. 3 and 4 are plan views of the inner structure of the display device.

The display device includes a pair of light transmissive substrates 10 and 12 (for example, glass substrates). The pair of light transmissive substrates 10 and 12 are arranged so as to be opposed to each other at an interval. One light transmissive substrate 10 has a light shielding film 34 formed thereon on a side opposed to the other light transmissive substrate 12. In the light shielding film 34, as illustrated in FIG. 2, a plurality of fixed apertures 36, which each allow passage of light, are formed.

The plurality of fixed apertures 36 each have an elongated shape including a long-side direction and a short-side direction. As illustrated in FIG. 3, the plurality of fixed apertures 36 include fixed apertures 36a of a first group in which the long-side direction is directed in a first direction Y, and fixed apertures 36b of a second group in which the long-side direction is directed in a second direction X orthogonal to the first direction Y. Note that, the angle between the first direction Y and the second direction X is not limited to a right angle. The number of the fixed apertures 36a of the first group is equal to the number of the fixed apertures 36b of the second group. The plurality of fixed apertures 36 are arranged so that at least one column including at least two fixed apertures 36a of the first group and at least one column including at least two fixed apertures 36b of the second group are alternately arrayed.

In other words, a plurality of first regions 44 in each of which at least one (two in the example of FIG. 3) fixed aperture 36a of the first group is arranged are arrayed in at least one column, and a plurality of second regions 46 in each of which at least one (two in the example of FIG. 3) fixed aperture 36b of the second group is arranged are arrayed in at least one column. In a row direction, the at least one column of the first regions 44 and the at least one column of the second regions 46 are alternately arranged.

As illustrated in FIG. 2, a plurality of shutters 14 are arranged at an interval from the light shielding film 34. The shutter 14 corresponds to the fixed aperture 36 and controls passage and blocking of light. Light is blocked when the shutter 14 covers the fixed aperture 36, and light is allowed to pass when the shutter 14 is positioned so as to avoid a position above the fixed aperture 36. In a case of the shutter 14 including a drive aperture 16, light is allowed to pass when the drive aperture 16 matches with the fixed aperture 36, that is, when the drive aperture 16 is arranged above the fixed aperture 36 (at a position opposed to the fixed aperture 36). In the example of FIG. 2, one fixed aperture 36 corresponds to one drive aperture 16. Alternatively, in a case of a shutter (not shown) without a drive aperture, light is allowed to pass when the shutter is retracted from the position above the fixed aperture.

In the example of FIG. 2, the plurality of shutters 14 are integrated. The plurality of shutters 14 include the plurality of drive apertures 16, respectively. That is, n shutters 14 (n≥2) are integrated so as to include n drive apertures 16. The n drive apertures 16 each have an elongated shape including a long-side direction and a short-side direction, so as to be elongated orthogonal to a moving direction of the n integrated shutters 14. The n drive apertures 16 are arranged so as to be aligned in the long-side direction and adjacent to each other in the short-side direction.

As illustrated in FIG. 3 or 4, the plurality of shutters 14 include shutters 14a of a first group, which correspond to the fixed apertures 36a of the first group, respectively, and are linearly driven in the second direction X, and shutters 14b of a second group, which correspond to the fixed apertures 36b of the second group, respectively, and are linearly driven in the first direction Y.

The shutter 14 is provided on the one light transmissive substrate 10. FIG. 2 is a view illustrating the shutter 14 and a drive portion 40 thereof. The shutter 14 is a plate including the drive aperture 16. Light is allowed to pass through the drive aperture 16, and is blocked at a part other than the drive aperture 16. The drive aperture 16 has a shape long in one direction. Note that, as illustrated in FIG. 1, light is supplied from a backlight unit 18 lying under the light transmissive substrate 10.

The shutter 14 is supported by a first spring 20 to be suspended above the light transmissive substrate 10. A plurality of (four in FIG. 2) first springs 20 support the shutter 14. The first spring 20 is fixed to the light transmissive substrate 10 by a first anchor portion 22.

The first spring 20 is made of an elastically deformable material, and is arranged so as to be deformable in a direction parallel to the plate surface of the shutter 14. Specifically, the first spring 20 includes a first portion 24 extending in a direction separating from the shutter 14 (direction intersecting (for example, orthogonal to) the length direction of the drive aperture 16), a second portion 26 extending in a direction along the length direction of the drive aperture 16 outwardly from a center of the drive aperture 16 in the length direction, and a third portion 28 further extending in the direction separating from the shutter 14 (direction intersecting (for example, orthogonal to) the length direction of the drive aperture 16). Further, as indicated by the arrows in FIG. 2, the shutter 14 is movable in the direction intersecting (for example, orthogonal to) the length direction of the drive aperture 16.

The light transmissive substrate 10 is provided with a second spring 32 supported by a second anchor portion 30. The second spring 32 is opposed to the second portion 26 of the first spring 20 on a side separated from the shutter 14 with respect to the second portion 26. When a voltage is applied to the second anchor portion 30, due to the electrostatic attractive force caused by the potential difference between the second anchor portion 30 and the secondportion 26 of the the first spring 20, the second portion 26 is attracted toward the second anchor portion 30. When the second portion 26 is attracted, the shutter 14 is also attracted via the first portion 24 provided integrally with the second portion 26. That is, the first spring 20 and the second spring 32 are provided for constituting the drive portion 40 for mechanically driving the shutter 14.

Light is allowed to pass when the above-mentioned drive aperture 16 of the shutter 14 and the fixed aperture 36 of the light shielding film 34 communicate with each other, and light is blocked when the fixed aperture 36 of the light shielding film 34 is covered due to the movement of the shutter 14. In other words, the shutter 14 is mechanically driven so as to control the passage and blocking of light through the fixed aperture 36 of the light shielding film 34. One drive aperture 16 and one fixed aperture 36 corresponding to each other constitute one pixel, and an image is displayed by a large number of pixels. Therefore, a plurality of (large number of) shutters 14 are provided.

The pair of light transmissive substrates 10 and 12 are fixed at an interval with a sealing member 38 illustrated in FIG. 1. The sealing member 38 is provided in close contact with the pair of light transmissive substrates 10 and 12. Further, the sealingmember 38 defines an encapsulation space between the pair of light transmissive substrates 10 and 12.

As illustrated in FIG. 1, oil 42 (for example, silicone oil 42) is filled in the encapsulation space. The shutter 14 and the drive portion 40 are arranged in the oil 42. The oil 42 can suppress vibrations caused by the movement of the shutter 14 and the drive portion 40. Further, through the filling of the oil 42, the dielectric constant increases, and the voltage for driving with the electrostatic attractive force can be reduced.

Next, the action and effect of the display device according to this embodiment are described. In this embodiment, the drive portion 40 enables each of the plurality of shutters 14 to move between a position above the fixed aperture 36 and a position retracted from the fixed aperture 36. FIG. 3 illustrates a state in which the shutter 14 is situated at a position covering the fixed aperture 36 from above (position at which the fixed aperture 36 and the drive aperture 16 are offset from each other). FIG. 4 illustrates a state in which the shutter 14 is situated at a position retracted from the position above the the fixed aperture 36 (position at which the fixed aperture 36 and the drive aperture 16 communicate with each other).

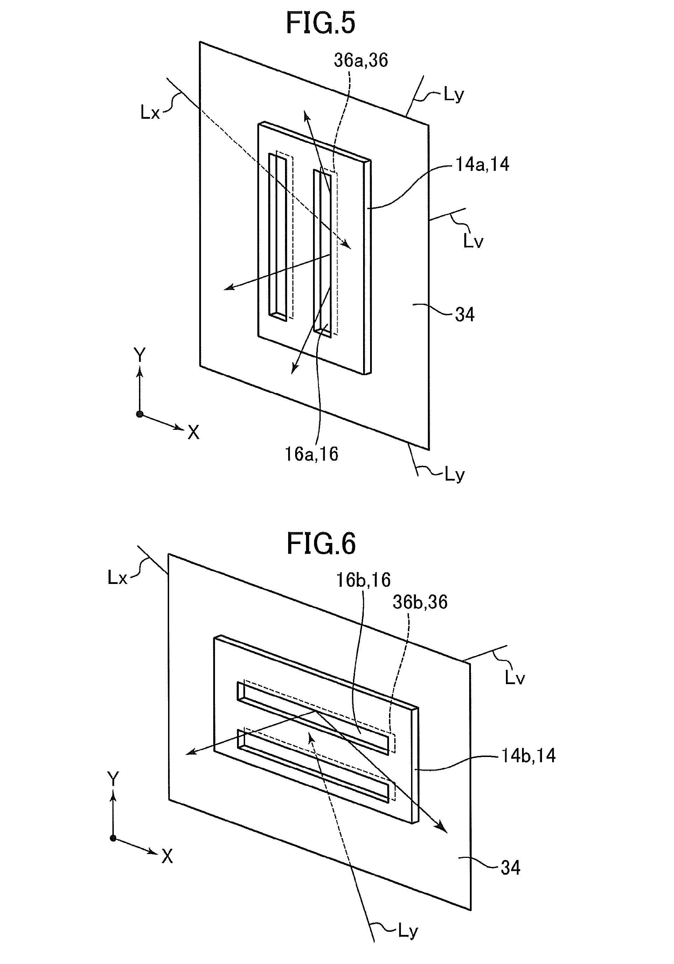

FIG. 5 is a view illustrating the shutter 14a of the first group when the fixed aperture 36a and the drive aperture 16a communicate with each other. Light passing through the fixed aperture 36a includes light Lᵥ traveling perpendicularly to the fixed aperture 36a (to the surface of the light shielding film 34), and light traveling obliquely to the fixed aperture 36a (to the surface of the light shielding film 34). The light traveling obliquely includes light L_{y} inclined in the first direction Y (along a plane extending in the first direction Y), and light Lₓ inclined in the second direction X (along a plane extending in the second direction X).

Because the fixed aperture 36a and the drive aperture 16a communicate with each other, the light Lᵥ passing through the fixed aperture 36a perpendicularly (in a direction orthogonal to the surface of the light shielding film 34) further passes through the drive aperture 16a. Further, the light L_{y} inclined in the first direction Y is inclined in the long-side direction of the drive aperture 16a, and hence the light L_{y} passes through the drive aperture 16a from the fixed aperture 36a. In contrast, even though the light Lₓ inclined in the second direction X passes through the fixed aperture 36a, the light Lₓ travels in the short-side direction of the drive aperture 16a, and hence the traveling thereof is blocked by the shutter 14. Therefore, the pixel controlled by the shutter 14a of the first group looks bright when obliquely viewed in the first direction Y and dark when obliquely viewed in the second direction X.

FIG. 6 is a view illustrating the shutter 14b of the second group when the fixed aperture 36b and the drive aperture 16b communicate with each other. Because the fixed aperture 36b and the drive aperture 16b communicate with each other, the light Lᵥ passing through the fixed aperture 36b perpendicularly (in a direction orthogonal to the surface of the light shielding film 34) further passes through the drive aperture 16b. Further, the light Lₓ inclined in the second direction X is inclined in the long-side direction of the drive aperture 16b, and hence the light Lₓ passes through the drive aperture 16b from the fixed aperture 36b. In contrast, even though the light L_{y} inclined in the first direction Y passes through the fixed aperture 36b, the light L_{y} travels in the short-side direction of the drive aperture 16b, and hence the traveling thereof is blocked by the shutter 14. Therefore, the pixel controlled by the shutter 14b of the second group looks bright when obliquely viewed in the second direction X and dark when obliquely viewed in the first direction Y.

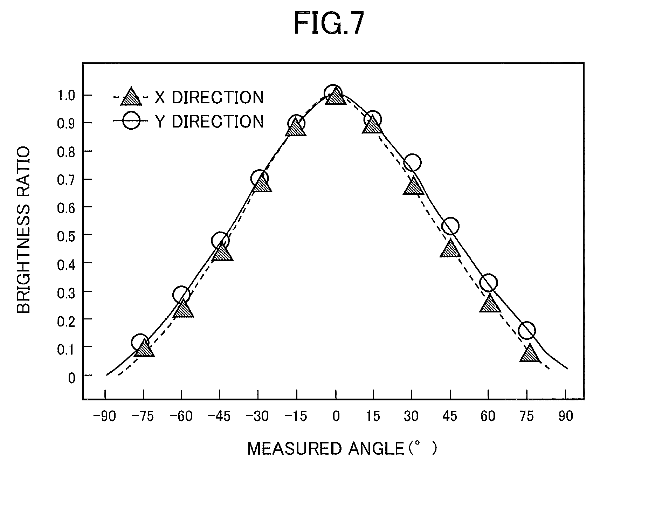

As described above, the shutter 14a of the first group and the shutter 14b of the second group have different (opposite) characteristics, and hence when both the shutters are used in combination, the difference in brightness arising depending on directions can be reduced. FIG. 7 is a graph showing brightness characteristics of the display device according to this embodiment. The horizontal axis represents the measured angle of the first direction Y or the second direction X, and the vertical axis represents the brightness ratio on the condition that the brightness when the measured axis is 0° (perpendicular) is set to 1.0. It can be understood from the graph that there is no great difference in brightness ratio between the first direction Y and the second direction X.

According to this embodiment, the plurality of elongated fixed apertures 36 are arranged in different directions, and hence it is possible to solve the problem in viewing angle characteristics that brightness differs depending on viewing directions.

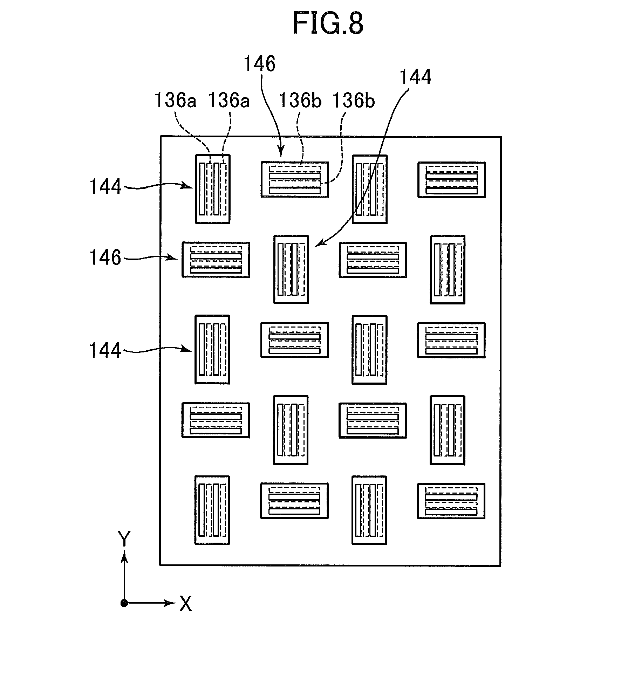

FIG. 8 is a view illustrating a modified example of the display device according to the embodiment of the present invention. In this example, first regions 144 in each of which at least one (two in the example of FIG. 8) fixed aperture 136a of the first group is arranged and second regions 146 in each of which at least one (two in the example of FIG. 8) fixed aperture 136b of the second group is arranged are alternately arranged in both of the column direction and the row direction. Other contents correspond to the contents described in the above-mentioned embodiment.

The present invention is not limited to the above-mentioned embodiment, and various modifications may be made thereto. For example, the structure described in the embodiment may be replaced by substantially the same structure, a structure which has the same action and effect, or a structure which can achieve the same object.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A display device, comprising:
a light shielding film (34) including a plurality of fixed apertures (36), which each allow passage of light;
a plurality of shutters (14), which are arranged at an interval from the light shielding film (34) and correspond to the plurality of fixed apertures (36), respectively, for controlling passage and blocking of the light; and
a drive portion (40) for causing each of the plurality of shutters (14) to move between a position for allowing the light to pass and a position for blocking the light,
wherein the plurality of fixed apertures (36) each have an elongated shape including a long-side direction and a short-side direction, the plurality of fixed apertures (36) comprising:
fixed apertures (36a) of a first group in which the long-side direction is directed in a first direction; and
fixed apertures of a second group (36b) in which the long-side direction is directed in a second direction different from the first direction, and
wherein the plurality of shutters (14) comprise:
shutters (14a) of a first group, which correspond to the fixed apertures (36a) of the first group, respectively, and are linearly driven in the second direction; and
shutters (14b) of a second group, which correspond to the fixed apertures (36b) of the second group, respectively, and are linearly driven in the first direction.

2. The display device according to claim 1, wherein the first direction and the second direction are orthogonal to each other.

3. The display device according to claim 1 or 2, wherein a number of the fixed apertures (36a) of the first group is equal to a number of the fixed apertures (36b) of the second group.

4. The display device according to any one of claims 1 to 3, wherein the plurality of fixed apertures (36) are arranged so that at least one column including at least two of the fixed apertures (36a) of the first group and at least one column including at least two of the fixed apertures (36b) of the second group are alternately arrayed.

5. The display device according to any one of claims 1 to 3, wherein a first region in which at least one of the fixed apertures (36a) of the first group is arranged and a second region in which at least one of the fixed apertures (36b) of the second group is arranged are alternately arranged in both of a column direction and a row direction.

6. The display device according to any one of claims 1 to 5,
wherein the plurality of shutters (14) are formed to comprise a plurality of drive apertures (16), respectively, and
wherein the light passes when the plurality of drive apertures (16) are arranged at positions opposed to the plurality of fixed apertures (36), respectively.

7. The display device according to claim 6, wherein n shutters, where n≥2, of the plurality of shutters (14) are integrated so as to comprise n drive apertures (16) of the plurality of drive apertures (16).

8. The display device according to claim 7, wherein the n drive apertures (16) each have an elongated shape including a long-side direction and a short-side direction, so as to be elongated orthogonal to a moving direction of the n integrated shutters (14), and are arranged so as to be aligned in the long-side direction and adjacent to each other in the short-side direction.
